# EUROPEAN PATENT SPECIFICATION

(11) **EP 1 468 796 B1**
(45) Date of publication and mention of the grant of the patent: **21.06.2006**
(21) Application number: 04009019.3
(22) Date of filing: 15.04.2004
(51) Int. Cl.: B27B 17/08, B27B 17/10

(54) **Chain saw with a clutch braking mechanism**
Kettensäge mit einem Kupplungs-und Bremsen-Mechanismus
Scie à chaîne avec mécanisme de frein et embrayage

(30) Priority: 16.04.2003 JP 2003112034
(43) Date of publication of application: 20.10.2004
(73) Proprietor: Makita Corporation, Anjo-shi, Aichi 446-8502 (JP)
(72) Inventor: Kondo, Masaki, Anjo-shi Aichi 446-8502 (JP)
(74) Representative: Kramer - Barske - Schmidtchen

(56) References cited:
- EP-A- 0 761 398
- DE-C- 400 518
- US-A- 3 857 180
- US-A- 4 033 038

## Description

### BACKGROUND OF THE INVENTION

### Field of the Invention

The present invention generally relates to chain saws, which include a motor encased in a housing, a guide bar provided on the housing, and a toothed chain stretched along the guide bar so as to revolve around the guide bar to cut work pieces. More particularly, the present invention relates to a chain saw according to the preamble of claim 1 provided with a braking mechanism. Such a chain saw is known from EPO 761 398 A1.

### Description of the Related Art

A typical chain saw includes a housing, a motor encased in the housing and activated by operation of a trigger switch, a spindle oriented transversely and rotated by the operation of the motor, a sprocket disposed at one side of the housing and rotated by the rotation of the spindle, a generally flat guide bar projecting forward from the housing, and a toothed chain stretched between the sprocket and the guide bar. When the rotation of the sprocket causes the chain to revolve around the guide bar, the chain saw becomes capable of cutting logs and other work pieces.

In such a chain saw, if no measure is taken to quickly stop the inertial revolution of the chain upon deactivation of the motor by releasing the trigger switch, the chain may continue to revolve and inadvertently damage the work piece, cause injury, or reduce the working efficiency of the power tool. Accordingly, various means have been incorporated so as to minimize the braking time from the release of the trigger switch. For example, a commonly employed means is an electric brake comprising a braking circuit which is used in combination with the motor's drive circuit and includes a wound wire for exerting a braking force. When the trigger switch of the chain saw is released to stop the rotation of the motor, the braking circuit is closed to apply a reverse current to the motor and thus bring the rotation of the motor to a halt. Additionally, as disclosed in Japan Published Unexamined Patent Application Nos. H08-281609 and H08-336809, mechanical brake systems have been also proposed and employed to achieve an immediate halt of the revolution of the chain. These known brake systems include a brake band encircling a brake drum coupled to the sprocket and a wire or a rod that connects the brake band to the trigger switch such that when the switch is released, the brake band clamps the brake drum to stop the revolution of the chain.

While the foregoing arrangements achieve their intended objectives, they are not free from certain problems and inconveniences. For example, the electric brake alone does not bring the chain to a halt immediately after the release of the trigger switch, thus creating a significant braking time. Even though the mechanical brakes do minimize the braking time, additional force is required for operation of the wire or the rod other than that required for the ON/OFF operation of the trigger switch. Unfortunately, this tends to reduce the ease of operation of the chain saw as well as the trigger switch. A combination of a saw chain stopping and a brake drum stopping device of an electromotive chain saw is disclosed in EP 0 761 398 A1. This known chain saw comprises the features of the preamble of present claim 1. In such a chain saw a centrifugal clutch is released quickly and the speed of stopping the brake drum is accelerated when the dynamic brake force is applied. A male clutch member is fixedly attached to a rotation shaft via steel balls received between axial grooves, such that the male clutch member is torque proof connected to the rotation shaft and is also slidable in the axial direction.

US 3,857,180 A discloses a chain saw inertia clutch assembly preferably for use in an engine-driven mechanism, such as a portable chain saw. It includes an inertia element axially displaceable into clutching and declutching postures in response to acceleration and deceleration of an engine. To avoid undesirable momentary engagement due to engine speeds surges at idle, an automatic restraining mechanism is provided for maintaining the inertia element in a declutching posture until the engine reaches a selected clutching speed. The inertia element is mounted on axially shiftable rollers, the rollers being interconnected by a cage to facilitate uniform shifting of the rollers and the inertia element. A plurality of helical slots are carried by the rotary element, with the inertia element carrying an annular track which faces the slots. A plurality of friction reducing roller mechanisms are provided, each roller mechanism being disposed partially in a slot and partially in the annular track. In response to acceleration and deceleration of the rotary element relative to the inertia element, the roller mechanisms are arranged to shift longitudinally within the slots, to urge the inertial element axially. A spring may be employed in conjunction with the known inertia clutch assembly to bias the inertia element of the clutch assembly away from its clutching posture, thereby facilitating rapid stoppage of the driven mechanism, such as the cutter chain of a portable chain saw.

### SUMMARY OF THE INVENTION

In view of the above-identified problems, an important object of the present invention is to provide a chain saw that shortens the braking time of the chain more effectively than an electric brake without affecting the ease of operation of the tool.

The above object and other related objects are realized by the invention, which provides a chain saw comprising the features of claim 1.

The foregoing arrangement reduces the braking time of the chain more effectively than electric brakes. As an additional advantage offered by the invention, the operation of the clutch mechanism imposes no load on the operation of the trigger switch, such that the operability of the trigger switch remains unaffected. Preferred embodiments are disclosed by the features of dependent claims 2-8.

### BRIEF DESCRIPTION OF THE ATTACHED DRAWINGS

For a fuller understanding of the nature and objects of the present invention, reference should be made to the following detailed description and the accompanying drawings, in which:
Figure 1 is a partially cross-sectional side view of an essential part of a chain saw constructed according to the teachings of the present invention;
Figure 2(A) is a partially cross-sectional plan view of the chain saw shown in Figure 1 when the chain saw is not in operation, and Figure 2(B) is a partial development plan of the chain saw's spindle; and
Figure 3(A) is a partially cross-sectional plan view of the chain saw shown in Figure 1 when the chain saw is in operation, and Figure 3(B) is a partial development plan of the chain saw's spindle.

### DETAILED DESCRIPTION OF THE PREFERRED EMBODIMENTS

Preferred embodiments of the present invention will be described hereinafter with reference to the attached drawings.

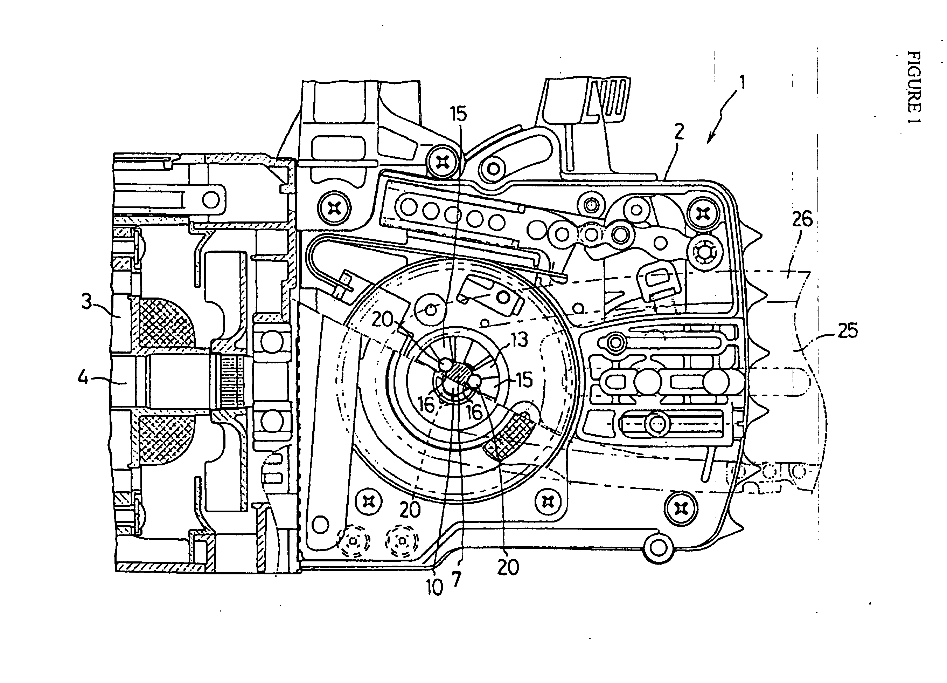

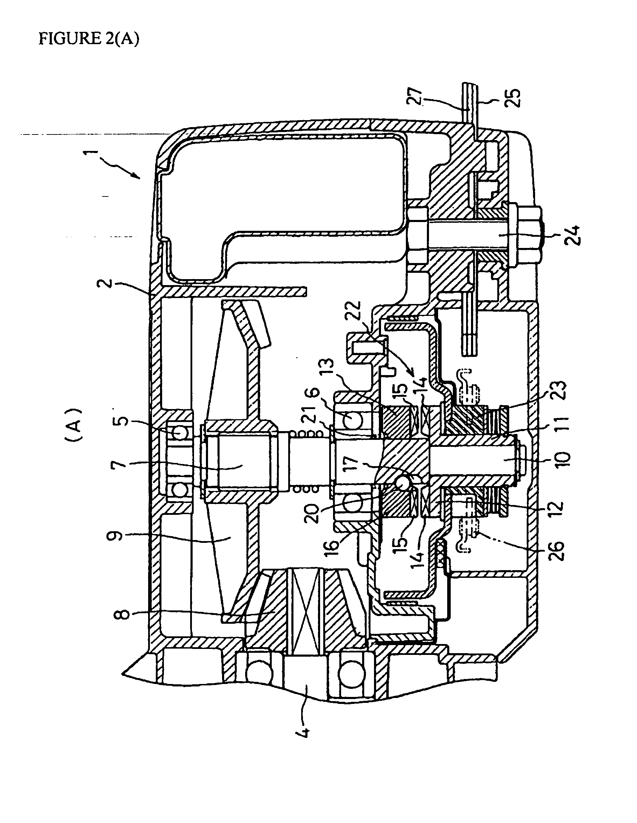

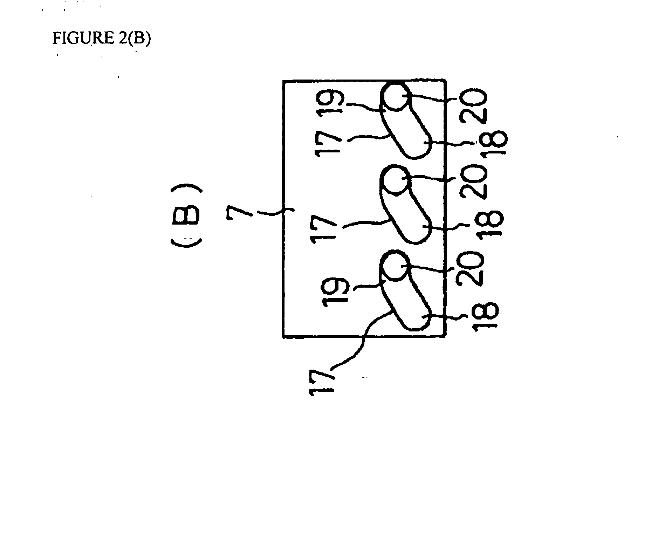

Figure 1 is a partially cross-sectional side view of an essential part of a chain saw 1 constructed according to the teachings of the present invention. Figure 2(A) is a partially cross-sectional plan view of the chain saw 1. The chain saw 1 includes a housing 2 and a motor 3 disposed within the housing 2 and oriented in the forward direction (the right side of Figures 1 and 2 is referred to as forward herein). The motor 3 includes an output shaft 4 protruding forward to transmit the torque of the motor 3 for subsequent cutting operation. Provided forward of the output shaft 4 is a spindle 7 supported at right angles to the output shaft 4 by a pair of ball bearings 5 and 6. The bevel gears 8 and 9 fitted on the respective top ends of the output shaft 4 and the spindle 7 are in mesh with or engage each other so as to transmit the rotation of the output shaft 4 to the spindle 7. Additionally, the spindle 7 extends through the housing 2 to the end 10 opposite to the bevel gear 9, protruding out of the side face of the housing 2. A first cam 11 with a flange 12 extending therefrom is fitted on the protruding end 10 in such a manner as to allow the cam 11 to rotate independently from the spindle 7. The first cam 11 has a generally cylindrical shape. Moreover, a second cam 13 is fitted on the spindle 7 inside of the first cam 11 (i.e., between the first cam 11 and the ball bearing 6). The second cam 13 is capable of rotation with the spindle 7. The second cam 13 has the same diameter as the flange -12 of the first cam 11. A plurality of first cam teeth 14 and a plurality of second cam teeth 15 are provided on the opposing faces of the first and second cams 11 and 13, respectively. The first and second cam teeth 14 and 15 are circumferentially arranged on the respective cams 11 and 13 at regular intervals and are capable of engaging each other only in the rotational direction of the spindle 7.

In addition, three connecting grooves 16 are provided in the inner peripheral surface of the second cam 13 at regular circumferential intervals such that the connecting grooves 16 are open toward the first cam 11. Likewise, as shown in Figure 2(B), three guide grooves 17 are provided in the outer peripheral surface of the spindle 7 at regular circumferential intervals. Each guide groove 17 comprises a slanted portion 18 extending at a predetermined lead angle between a first end proximal to the protruding end 10 of the spindle 7 and a second end distal to protruding end 10 of the spindle 7. The groove 17 additionally includes a retaining portion 19 that is connected at an angle to the slanted portion 18 at a junction (i.e., the second end of slanted portion) and extends circumferentially along the outer peripheral surface of the spindle 7. Accordingly, each guide groove 17 is a continuous two-part groove bent at the intermediate junction. A coupler, such as a steel ball 20, is fitted between a connecting groove 16 and a guide groove 17 so as to connect the spindle 7 and the second cam 13. Furthermore, a biasing means, such as a coil spring 21, is fitted around the spindle 7 between the ball bearing 6 and the second cam 13 so as to bias the second cam 13 toward the first cam 11.

As shown in Figure 2A, when the motor 3 is not operating, the steel balls 20 are located at the inner ends (the upper end of the figure) of the respective connecting grooves 16 of the second cam 13 as well as in the retaining portions 19 of the respective guide grooves 17 of the spindle 7. Accordingly, the retaining portions 19 of the guide grooves 17 prevent the steel balls 20 and the second cams 13 from moving toward the first cam 11. In this operating condition, the second cam 13 is located in a retracted position in which the second cam 13 is disengaged from the first cam 11, such that the rotation of the second cam 13 cannot be transmitted to the first cam 11. According to a clutch mechanism 22 thus fitted between the spindle 7 and the first cam 11, when the spindle 7 is in rotation, the second can 13 couples the spindle 7 to the first cam 11 for the transmission of rotation and when the spindle 7 is stationary, the second cam 13 is disengaged from the first cam 11, thus interrupting the integral rotation of the first cam 11 with the spindle 7.

Additionally included in the chain saw 1 is a sprocket 23 fitted on the first cam 11 so as to be integrally rotatable with the first cam 11. The chain saw 1 further includes a flat guide bar 25 fastened by a bolt 24 to one side of the housing 2 such that the guide bar 25 projects forward of the sprocket 23 at a right angle to the axis of the spindle 7. An endless toothed chain 26 is fitted around the sprocket 23 and the guide bar 25, such that the rotation of the sprocket 23 allows the chain 26 to revolve along the groove 27 provided in the periphery of the guide bar 25.

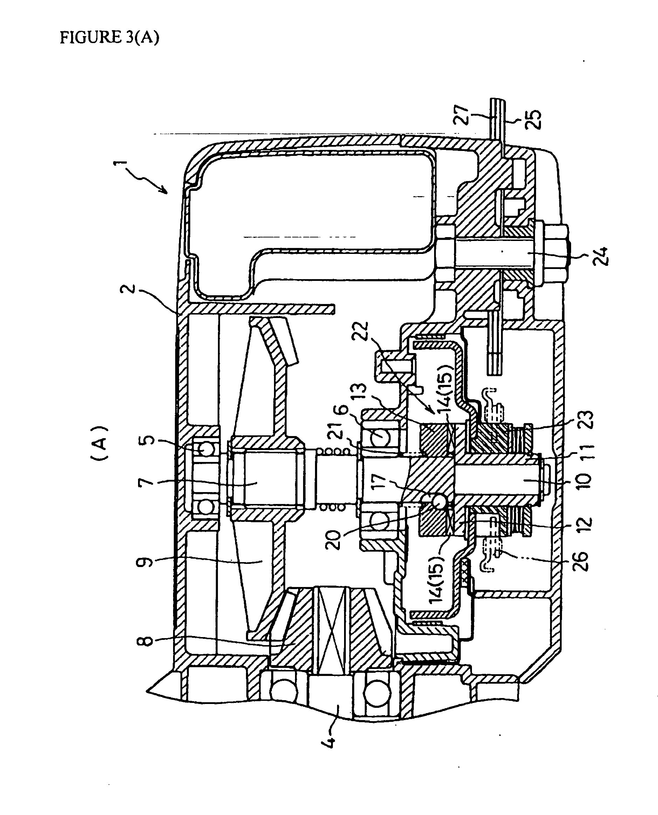

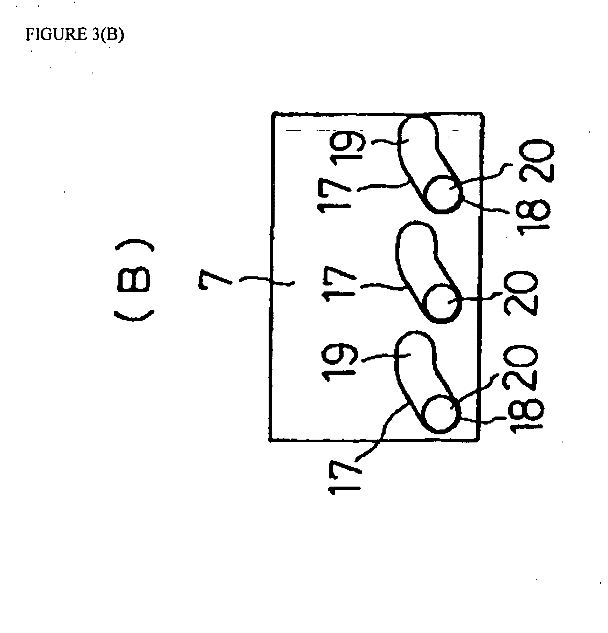

In a chain saw 1 constructed as described above, when a trigger switch (not shown) provided on the housing 2 is operated to activate the motor 3, the output shaft 4 is caused to rotate, which in turn rotates the spindle 7 clockwise (as seen in Figure 1) via the bevel gears 8 and 9 of the output shaft 4 and the spindle 7, respectively. Upon activation of the motor 3, a difference in speed develops between the rotation of the spindle 7 and that of the second cam 13. In particular, the second cam 13 tends to rotate at a lower rate than the spindle 7, thus moving the steel balls 20 from the retaining portions 19 of the respective guide grooves 17 into the slanted portions 18. Subsequently, the biasing force of the coil spring 21 advances the second cam 13 toward the top end 10 of the spindle 7 while moving the steel balls 20 along the slanted portions 18 towards the aforementioned first ends. This continues until the second cam 13 abuts the first cam 11, causing the first and second cam teeth 14 and 15 to engage or mesh with each other in the forward position shown in Figure 3. This integrates the first cam 11 with the spindle 7 via the second cam 13 and causes the sprocket 23 to rotate, which in turn causes the chain 26 to revolve along the guide bar 25, thus enabling the chain saw 1 to cut a work piece. Once the steel balls 20 reach the first ends of the guide grooves 17, the balls 20 are maintained in their respective positions by the biasing force of the coil spring 21. This means that the second cam 13 remains in the forward position while the spindle 7 is in rotation.

The chain saw 1 additionally includes a drive circuit (not shown) to control the operation of the motor 3. An electric braking circuit (not shown) including a wound wire for exerting braking force on the motor 3 is installed in combination with the drive circuit for the motor. When the trigger switch of the chain saw 1 is released, for example upon completion of cutting operation, the braking circuit is closed to apply a reverse current to the motor 3. As this applies the brakes to the rotation of the motor 3, the rotational speeds of the output shaft 4 and the spindle 7 are reduced. Contrary to their relative speeds at the start of the operation, the rotational speed of the spindle 7 becomes lower than that of the first and second cams 11 and 13, which tend to maintain their rotational speed by inertia. This difference in speed developing between the spindle 7 and the cams 11 and 13 causes the steel balls 20 to move along the respective slanted portions 18 from the first ends to the second ends of the guide grooves 17. Simultaneously, the second cam 13 moves back against the biasing force 21 along the slanted portions 18, and when the steel balls 20 reach the respective retaining portions 19 of the guide grooves 17 as shown in Figure 2(A), the second cam 13 is disengaged from the first cam 11.

During the braking of the motor 3, the clutch mechanism 22 renders the first cam 11 and the sprocket 23 freely rotatable with respect to the spindle 7. However, the friction created by the chain 26 revolving along and in contact with the guide bar 25 exerts large braking force on the chain 26 and the sprocket 23, thus bringing the sprocket 23 and the chain 26 to an immediate halt. It should be noted that the braking force on the chain 26 develops as soon as the difference in rotational speed occurs between the spindle 7 and the second cam 13 and that the revolution of the chain 26 stops before the output shaft 4 and the spindle 7 are brought to a complete halt by the electric brake.

As described above, according to the chain saw 1 of the foregoing embodiment, a sprocket 23 and a first cam 11 are integrally provided, and a second cam 13 capable of engaging the first cam 11 is disposed on a spindle 7 so as to be rotatable independently from the spindle 7 and axially movable with respect to the spindle. The chain saw 1 additionally includes between the spindle 7 and the first cam 11 a clutch mechanism 22 that moves the second cam 13 to the first cam 11 and engages the second cam with the first cam in response to the difference in rotational speed between the spindle 7 and the second cam 13 that develops at the activation of the motor 3. Moreover, the clutch mechanism 22 disengages the second cam 13 from the first cam 11 in response to the difference in rotational speed between the spindle 7 and the second cam 13 that develops at the application of brakes to the motor 3, reducing the braking time of the chain 26 more effectively than electric brakes. As an additional advantage offered by the invention, the foregoing operation of the clutch mechanism 22 imposes no load on the operation of the trigger switch, such that the operability of the trigger switch remains unaffected.

In particular, the clutch mechanism 22 is constructed from a coil spring 21 that biases the second cam 13 toward the first cam 11, guide grooves 17 provided in the spindle 7, and steel balls provided on the second cam 13. This arrangement allows the difference in rotational speed between the spindle 7 and the second cam 13 to move the steel balls 20 along the guide grooves 17 so as to allow the second cam 13 to engage and disengage from the first cam 11. As a result, the spindle 7 is positively coupled to the first cam 11 (the sprocket 23) at the activation of the motor 3, whereas the spindle 7 is equally positively disengaged from the first cam 11 (the sprocket 23) at the application of the brake to the motor 3.

In the foregoing embodiment, the connecting grooves are provided in the inner peripheral surface of the second cam 13 and the guide grooves are provided in the outer peripheral surface of the spindle 7. However, the location of the grooves may be reversed, such that guide grooves with a bent are formed in the second cam 13 and axial connecting grooves are formed in the first cam 11 so as to move the second cam 13 in response to the difference in rotational speed that develops between the second cam and the spindle 7. In this case, however, as applied to the development plan of Figure 2(B), the slanted portion of each guide groove must be oriented upwards so that the first end of that portion is located above the retaining portion.

Furthermore, if sufficient space is available, the biasing means, such as a coil spring, may be disposed below the second cam 13 (i.e., as seen in Figures 2(A) and 3(A)), rather than above the second cam as in the foregoing embodiment. In this case, however, as applied to the development plan of Figure 2(B), the retaining portion of each guide groove will be connected to the lower end of the slanted portion.

According to the foregoing embodiment, the first cam 11 is mounted on the protruding end 10 of the spindle 7. It should be noted that the first cam 11 may be provided in different manners than that of the embodiment. For example, the first cam may be supported on a rotating shaft other than the spindle 7 such that the first cam is coaxially disposed with and opposes the second cam.

Additionally, instead of disposing steel balls in the connecting grooves as couplers as in the embodiment, one or more semicircular protrusions may be provided as couplers on one of the inner peripheral surface of the second cam and the outer peripheral surface of the spindle. Such semicircular protrusions may then be placed in the guide grooves in the other of the second cam and the spindle so as to guide the second cam in a manner similar to the one described above.

Moreover, other features and elements, including but not limited to the shapes of the first and second cams and the teeth thereon, may be altered or modified to suit particular applications without departing from the scope of the invention as claimed. One of ordinary skill in the art will additionally appreciate different ways to alter the parameters of the embodiments disclosed, such as the size, shape, or type of elements or materials, without departing from the scope of the claims.

## Claims

1. A chain saw (1) comprising:
a housing (2);
a trigger switch provided on the housing (2):
a motor (3) leased within the housing (2) and activated by operation of the trigger switch;
a spindle (7) supported within the housing (2) for being rotated by the operation of within the being rotated by the operation of the motor (3);
a sprocket (23) provided on a side face of the housing (2) for being rotated by the rotation of the spindle;
a guide bar (25) provided on the side face of the housing (2) and projecting forward of the sprocket (23),
a chain (26) stretched between the sprocket (23) and the guide bar (25) for being revolved around a periphery of the guide bar (25) by the rotation of the sprocket (25);
a drive circuit for the motor (3) including an electric brake for applying brakes to the motor (3) upon release of the trigger switch;
a first cam (11) integrally coupled to the sprocket (23) between the sprocket (23) and the spindly (7)
a second cam (13) disposed on the spindle (7) so as to be capable of engaging the first cam (11) the second cam (13) being independently rotatable from and axially slidable with respect to the spindle; (2) **characterized by**
a clutch mechanism (22) provided between the spindle (7) and the first cam (11) for
moving the second cam (13) to the first cam (11) and engaging the second cam (13) with the first cam (11) in response to the difference in rotational speed between the spindle (7) and the second cam that develops at the activation of the motor (3)
disengaging the second cam (13) from the first cam (11) in response to the difference in rotational speed between the spindle and the second cam (13) that develops at the application of brakes to the motor (3) and,
a biasing means (21) for biasing the second cam (13) toward the first cam (11),
at least one guide groove (17) provided in one of an outer peripheral surface of the spindle (7) and an inner peripheral surface of the second cam, the at least one guide groove (17) having a slanted portion (18) that extends at a predetermined lead angle between a first end and a second end thereof and a retaining portion (19) extending circumferentially from the second end of the slanted portion (18) and
at least one coupler (20) provided on the other one of the outer peripheral surface of the spindle (7) and the inner peripheral surface of the second cam (13) and fitted in the at least one guide groove (17),
the clutch mechanism (22) moving the at least one coupler (20) along the guide groove (17) in response to the difference in rotational speed between the spindle (7) and the second cam (13) so as to cause the second cam (13) to engage and disengage from the first cam (11).

2. A chain saw (1) in accordance with claim 1, wherein three guide grooves (17) and three couplers (20) are provided and further wherein each coupler (20) is partially disposed in one of the three guide grooves (17).

3. A chain saw (1) in accordance with claim 1 or 2 wherein the biasing means is a coil spring (21) fitted on the spindle (7) between a fixed part of the chain saw (1) and the second cam (13).

4. A chain saw (1) in accordance with one of the preceding claim, wherein the first cam (11) has a cylindrical portion mounted on an end (10) of the spindle (7) protruding out of the housing (2), so as to be freely rotatable with respect to the spindle (7) and further wherein the sprocket is mounted on the cylindrical portion of the first cam (11).

5. A chain saw (1) in accordance with one of the preceding claim, wherein the first cam (11) is coaxial with the second cams, (13) and further wherein the first cam (11) includes an inner side face that has a plurality of teeth (14) and the second cam (13) includes an outer side face that opposes the inner side face of the first cam (11) and has a plurality of teeth (15) capable of engaging and disengaging from the plurality of teeth (14) of the first cam (11).

6. A chain saw (1) in accordance with one of the preceding claims wherein when the motor (3) is not activated, the at least one coupler (20) is located in the retaining portion (19) of the at least one guide groove (17) and the second cam (13) tends to rotate at a slower rate than the spindle (7) following the activation of the motor, (3) causing the coupler (20) to move along the retaining portion (19) and subsequently into the slanted portion (13) of the guide groove (17), thus moving the second cam (13) toward the first cam (11), and
further wherein when the electric brake is applied to the operation of the motor (3), the spindle (7) is caused to rotate at a lower rate than the first and second cams (11,13), causing the at least one coupler (20) and thus the second cam (13) to move along the slanted portion (18) of the guide groove (17) until the second cam (19) is disengaged from the first cam (11) and the coupler (20) is located in the retaining portion (19) of the guide groove.

7. A chain saw (1) in accordance with claim 1 further including at least one connecting groove (16) provided in the other one of the outer peripheral surface of the spindle (7) and the inner peripheral surface of the second cam (13),
wherein the at least one coupler (20) is a ball partially fitted in the at least one connecting groove (16) and partially fitted in the at least one guide groove (17).

8. A chain saw (1) in accordance with claim 7, wherein three guide grooves (17) three connecting grooves, (16) and three balls (20) are provided and further wherein each ball (20) is disposed between one of the three connecting grooves (16) and one of the three guide grooves (17).

## Patentansprüche

1. Kettensäge (1) umfassend:
ein Gehäuse (2),
einen Auslöseschalter, der sich an dem Gehäuse (2) befindet,
einen in dem Gehäuse (2) eingeschlossenen Motor (3), der durch Betätigung des Auslöseschalters eingeschaltet wird,
eine Spindel (7), die drehbar in dem Gehäuse (2) gelagert ist und durch den in Betrieb befindlichen Motor (3) in Drehung versetzbar ist,
ein Kettenrad (23), das sich an einer Seitenfläche des Gehäuses (2) befindet und durch die Rotation der Spindel drehbar ist,
eine Führungsschiene (25), die sich an der Seitenfläche des Gehäuses (2) befindet und von dem Kettenrad (23) nach vorn vorsteht,
eine Kette (26), die sich zwischen dem Kettenrad (23) und der Führungsschiene (25) erstreckt und durch die Drehung des Kettenrads (23) auf dem Außenumfang der Führungsschiene (25) in Umlauf versetzbar ist,
eine Steuerschaltung für den Motor (3), die eine elektrische Bremse zum Ausüben einer Bremskraft auf den Motor (3) nach dem Loslassen des Auslöseschalters beinhaltet,
eine erste Nocke (11), die zwischen dem Kettenrad (23) und der Spindel (7) mit dem Kettenrad (23) integriert gekoppelt ist,
eine zweite Nocke (13), die auf der Spindel (7) so angeordnet ist, dass sie mit der ersten Nocke (11) in Eingriff bringbar ist, wobei die zweite Nocke (13) gegenüber der Spindel (7) unabhängig drehbar und axial verschiebbar ist, **gekennzeichnet durch**
einen Kupplungsmechanismus (22), der sich zwischen der Spindel (7) und der ersten Nocke (11) befindet zum
Bewegen der zweiten Nocke (13) auf die erste Nocke (11) und zum in Eingriff bringen der zweiten Nocke (13) mit der ersten Nocke (11) infolge des sich beim Einschalten des Motors (3) entwickelnden Drehzahlunterschieds zwischen der Spindel (7) und der zweiten Nocke (13),
Ausrücken der zweiten Nocke (13) von der ersten Nocke (11) infolge des Drehzahlunterschieds zwischen der Spindel (7) und der zweiten Nocke (13), der sich infolge der Anwendung von Bremsen auf den Motor (3) entwickelt, und
ein Vorspannmittel (21) zum Vorspannen der zweiten Nocke (13) gegen die erste Nocke (11) hin,
zumindest eine Führungsnut (17), die sich auf der Außenumfangsfläche der Spindel (7) oder der Innenumfangsfläche der zweiten Nocke (13) befindet, wobei die zumindest eine Führungsnut (17) einen Schrägabschnitt (18), der sich in einem vorbestimmten schrägen Winkel zwischen einem ersten Ende und einem zweiten Ende hiervon erstreckt, und einen Rückhalteabschnitt (19), der sich von dem zweiten Ende des Schrägabschnitts (18) umfänglich erstreckt, aufweist, und
zumindest ein Kupplungselement (20), das sich auf dem anderen Element, der Außenumfangsfläche der Spindel (7) oder der Innenumfangsfläche der zweiten Nocke (13) befindet, und in zumindest eine Führungsnut (17) eingesetzt ist,
wobei der Kupplungsmechanismus (22) das zumindest eine Kupplungselement (20) infolge des Drehzahlunterschieds zwischen der Spindel (7) und der zweiten Nocke (13) entlang der Führungsnut (17) bewegt, um so zu bewirken, dass die zweite Nocke (13) mit der ersten Nocke (11) in Eingriff gelangt oder außer Eingriff gelangt.

2. Kettensäge (1) nach Anspruch 1, wobei drei Führungsnuten (17) und drei Kupplungselemente (20) vorhanden sind und wobei ferner jedes Kupplungselement (20) sich zum Teil in einer der drei Führungsnuten (17) befindet.

3. Kettensäge (1) nach Anspruch 1 oder 2, wobei das Vorspannmittel eine Schraubenfeder (21) ist, die zwischen einem feststehenden Teil der Kettensäge (1) und der zweiten Nocke (13) eingesetzt ist.

4. Kettensäge (1) nach einem der voranstehenden Ansprüche, wobei die erste Nocke (11) einen zylindrischen Abschnitt aufweist, der an einem Ende (10) der Spindel (7), das aus dem Gehäuse (2) vorsteht, gegenüber der Spindel (7) frei drehbar angebracht ist, und wobei ferner das Kettenrad auf dem zylindrischen Abschnitt der ersten Nocke (11) angebracht ist.

5. Kettensäge (1) nach einem der voranstehenden Ansprüche, wobei die erste Nocke (11) koaxial zu der zweiten Nocke (13) liegt, und wobei ferner die erste Nocke (11) eine Innenseitenfläche aufweist, die mehrere Zähne (14) besitzt und die zweite Nocke (13) eine Außenseitenfläche aufweist, die der Innenseitenfläche der ersten Nocke (11) gegenüberliegt und mehrere Zähne (15) besitzt, die mit den mehreren Zähnen (14) der ersten Nocke (11) in und außer Eingriff bringbar sind.

6. Kettensäge (1) nach einem der voranstehenden Ansprüche, wobei, wenn der Motor (3) nicht eingeschaltet ist, das zumindest eine Kupplungselement (20) in dem Rückhalteabschnitt (19) der zumindest einen Führungsnut (17) platziert ist, und wobei nach dem Einschalten des Motors (3) die zweite Nocke (13) dazu tendiert, sich mit einer geringeren Geschwindigkeit als die Spindel (7) zu drehen, was bewirkt, dass sich das Kupplungselement (20) entlang des Rückhalteabschnitts (19) und darauf hin in den Schrägabschnitt (18) der Führungsnut (17) bewegt, wodurch die zweite Nocke (13) zur ersten Nocke (11) hin bewegt wird, und
wobei ferner, wenn die elektrische Bremse auf den laufenden Motor (3) einwirkt, die Spindel (7) gezwungen wird, sich mit einer niedrigeren Geschwindigkeit als die erste und zweite Nocke (11, 13) zu drehen, was bewirkt, dass sich das zumindest eine Kupplungselement (20) und somit die zweite Nocke (13) solange entlang des Schrägabschnitts (18) der Führungsnut (17) bewegt, bis die zweite Nocke (13) außer Eingriff mit der ersten Nocke (11) gelangt und das Kupplungselement (20) in dem Rückhalteabschnitt (19) der Führungsnut (17) platziert ist.

7. Kettensäge (1) nach Anspruch 1, des Weiteren enthaltend zumindest eine Verbindungsnut (16), die sich in dem anderen Element der Außenumfangsfläche der Spindel (7) und der Innenumfangsfläche der zweiten Nocke (13) befindet,
wobei das zumindest eine Kupplungselement (20) eine Kugel ist, die teilweise in der zumindest einen Verbindungsnut (16) und teilweise in der zumindest einen Führungsnut (17) eingesetzt ist.

8. Kettensäge (1) nach Anspruch 7, wobei drei Führungsnuten (17), drei Verbindungsnuten (16) und drei Kugeln (20) vorhanden sind, und wobei ferner jede Kugel (20) zwischen einer der drei Verbindungsnuten (16) und einer der drei Führungsnuten (17) angeordnet ist.

## Revendications

1. Scie à chaîne (1), comprenant :
un boîtier (2),
une commande de démarrage prévue sur le boîtier (2),
un moteur (3) encastré à l'intérieur du boîtier (2) et actionné par le fonctionnement de la commande de démarrage ;
une broche (7) supportée à l'intérieur du boîtier (2) destinée à être mise en rotation grâce au fonctionnement du moteur (3);
un pignon (23) prévu sur une face latérale du boîtier (2) destiné à être mis en rotation par la rotation de la broche ;
un guide-chaîne (25) prévu sur la face latérale du boîtier (2) et en saillie à l'avant du pignon (23),
une chaîne (26) étirée entre le pignon (23) et le guide-chaîne (25) destinée à être amenée à tourner autour d'une périphérie du guide-chaîne (25) par la rotation du pignon (25),
un circuit d'entraînement pour le moteur (3) incluant un frein électrique permettant d'appliquer un freinage au moteur (3) lors du déclenchement de la commande de démarrage ;
une première came (11) couplée d'un seul tenant au pignon (23) entre le pignon (23) et la broche (7) ;
une deuxième came (13) disposée sur la broche (7) de manière à pouvoir s'engager dans la première came (11), la deuxième came (13) pouvant être mise en rotation indépendamment à partir de, et coulisser axialement par rapport à la broche (7), **caractérisée par** :
un mécanisme d'embrayage (22) prévu entre la broche (7) et la première came (11) permettant de
déplacer la deuxième came (13) vers la première came (11) et d'embrayer la deuxième came (13) avec la première came (11), en réponse à la différence de vitesse de rotation entre la broche (7) et la deuxième came (13) qui se développe lors de l'activation du moteur (3),
débrayer la deuxième came (13) de la première came (11), en réponse à la différence de vitesse de rotation entre la broche (7) et la deuxième came (13) qui se développe lors de l'application de freinages au moteur (3), et
un moyen de rappel (21) permettant de rappeler la deuxième came (13) vers la première came (11),
au moins une rainure de guidage (17) prévue dans l'une d'une surface périphérique externe de la broche (7) et d'une surface périphérique interne de la deuxième came (13), la au moins une rainure de guidage (17) ayant une partie penchée (18) qui s'étend selon un angle d'inclinaison prédéterminé entre une première extrémité et une deuxième extrémité de celle-ci, et une partie de retenue (19) s'étendant de façon circonférentielle à partir de la deuxième extrémité de la partie penchée (18), et
au moins un coupleur (20) prévu sur l'autre surface de la surface périphérique externe de la broche (7) et de la surface périphérique interne de la deuxième came (13), et ajusté dans la au moins une rainure de guidage (17),
le mécanisme d'embrayage (22) déplaçant le au moins un coupleur (20) le long de la rainure de guidage (17) en réponse à la différence de vitesse de rotation entre la broche (7) et la deuxième came (13), de manière que la deuxième came (13) embraye avec, et débraye de la première came (11).

2. Scie à chaîne (1) selon la revendication 1, dans laquelle trois rainures de guidage (17) et trois coupleurs (20) sont prévus et, en outre, dans laquelle chaque coupleur (20) est partiellement disposé dans l'une des trois rainures de guidage (17).

3. Scie à chaîne (1) selon la revendication 1 ou 2, dans laquelle le moyen de rappel est un ressort hélicoïdal (21) ajusté sur la broche (7) entre une partie fixe de la scie à chaîne (1) et la deuxième came (13).

4. Scie à chaîne (1) selon l'une quelconque des revendications précédentes, dans laquelle la première came (11) a une partie cylindrique montée sur une extrémité (10) de la broche (7) en saillie à l'extérieur du boîtier (2), de manière à pouvoir être mise en rotation librement par rapport à la broche (7) et, en outre, dans laquelle le pignon est monté sur la partie cylindrique de la première came (11).

5. Scie à chaîne (1) selon l'une quelconque des revendications précédentes, dans laquelle la première came (11) est coaxiale avec la deuxième came (13) et, en outre, dans laquelle la première came (11) inclut une face latérale interne ayant une pluralité de dents (14), et la deuxième came (13) inclut une face latérale externe opposée à la face latérale interne de la première came (11) et ayant une pluralité de dents (15) capables d'embrayer avec, et de débrayer de la pluralité de dents (14) de la première came (11).

6. Scie à chaîne (1) selon l'une quelconque des revendications précédentes, dans laquelle, lorsque le moteur (3) n'est pas activé, le au moins un coupleur (20) est situé dans la partie de retenue (19) de la au moins une rainure de guidage (17), et la deuxième came (13) tend à se mettre en rotation à une vitesse inférieure à la broche (7), suite à l'activation du moteur (3), ce qui pousse le coupleur (20) à se déplacer le long de la partie de retenue (18) puis dans la partie penchée (19) de la rainure de guidage (17), déplaçant ainsi la deuxième came (13) vers la première came (11), et
dans laquelle, en outre, lorsqu'on applique le frein électrique au fonctionnement du moteur (3), la broche (7) est amenée à se mettre en rotation à une vitesse inférieure à la vitesse des première et deuxième cames (11, 13), ce qui pousse le au moins un coupleur (20) et ainsi la deuxième came (13) à se déplacer le long de la partie penchée (18) de la rainure de guidage (17) jusqu'à ce que la deuxième came (19) débraye de la première came (11) et que le coupleur (20) soit situé dans la partie de retenue (19) de la rainure de guidage (17).

7. Scie à chaîne (1) selon la revendication 1, incluant en outre au moins une rainure de raccordement (16) prévue dans l'autre surface de la surface périphérique externe de la broche (7) et de la surface périphérique interne de la deuxième came (13),
dans laquelle le au moins un coupleur (20) est une bille partiellement ajustée dans la au moins une rainure de raccordement (16) et partiellement ajustée dans la au moins une rainure de guidage (17).

8. Scie à chaîne (1) selon la revendication 7, dans laquelle trois rainures de guidage (17), trois rainures de raccordement (16) et trois billes (20) sont prévues et, en outre, dans laquelle chaque bille (20) est disposée entre l'une des trois rainures de raccordement (16) et l'une des trois rainures de guidage (17).
